# EUROPÄISCHE PATENTANMELDUNG

(11) **EP 1 892 377 A1**
(43) Veröffentlichungstag der Anmeldung: **27.02.2008**
(21) Anmeldenummer: 06017045.3
(22) Anmeldetag: 16.08.2006
(51) Int. Cl.: F01D 5/16, F04D 29/66

(54) **Schaufel für Strömungsmaschine**

(71) Anmelder: SIEMENS AKTIENGESELLSCHAFT, 80333 München (DE)
(72) Erfinder: Richter, Christoph, 49477 Ibbenbüren (DE)

(57) **Zusammenfassung**

Die Erfindung betrifft eine Schaufel (1) für eine Strömungsmaschine, wobei an der Schaufel (1) ein Schwingungsreduktionsmittel (11) angeordnet ist und derart ausgebildet wird, dass im Betrieb der Strömungsmaschine auftauchende schädigende Schwingungen der Schaufel (1) gedämpft werden, wobei die Dämpfung im Wesentlichen durch eine bewegbare Schwingungsmasse (13) erreicht wird.

## Beschreibung

Die Erfindung betrifft eine Schaufel für eine Strömungsmaschine, wobei in der Schaufel ein Schwingungsreduktionsmittel angeordnet ist, das derart ausgebildet ist, dass es im Betrieb der Strömungsmaschine auftauchende schädigende Schwingungen der Schaufel reduziert.

Beim Bau von Strömungsmaschinen ist es üblich, Dämpfer, insbesondere für an einem Turbinenrotor angeordnete Laufschaufeln vorzusehen, die zum Dämpfen von hohen Schwingungen geeignet sind. Es ist bekannt, Dämpfer so auszubilden, dass eine Dämpfung von einer Schaufel zu einer nächsten Schaufel erfolgt. Dennoch taucht das Problem auf, dass die Dämpfer nur auf ein paar spezielle Moden der Schwingungsbewegung abgestimmt werden können und die Schwingungsbewegung in anderen Moden nicht dämpft. Bei den so genannten Turbinenschaufel-zu-Turbinenschaufel-Dämpfern wird ein Reibwiderstand zwischen den Schaufeln gebildet. Es sind Dämpfer für Schaufeln bekannt, bei denen der Reibwiderstand zwischen der Schaufel und einer Grundstruktur gebildet wird.

Verdichter- und/oder Turbinenschaufeln erfahren im Betrieb Schwingungsanregungen, die zu Schwingungen führen können. Im Folgenden wird der Begriff Schaufel für die Bezeichnung von Verdichter- und/oder Turbinenschaufeln verwendet.

Die Schwingungen der Schaufeln während des Betriebes sind unerwünscht, weil sie zu einer Materialermüdung der Schaufeln führen können. Da die Schaufeln in so genannte Rotorklauen in einem Rotor befestigt sind, können die Schwingungen auch zu einer Materialermüdung des Rotors im Bereich der Rotorklauen führen.

Es werden große Anstrengungen unternommen, um die Schwingungen zu dämpfen, denn verbesserte logarithmische Dämpfungsdekremente, auch wenn die Verbesserung lediglich um einen Promillepunkt liegt, sind erstrebenswert. Die Gesamtdämpfung von Deckplattenschaufeln liegt beispielsweise bei 0,5% logdec. Wenn es gelänge, diesen Wert zu verdoppeln, würden Resonanzamplituden der schwingenden Schaufeln halbiert werden. Dies führt dazu, dass bei Konstruktion und Abstimmung der Schaufel eine Mode weniger zu berücksichtigen wäre. Außerdem könnte der Bereich der zulässigen Drehzahlen im Betrieb zumindest um einige Prozent vergrößert werden. Des Weiteren könnten einzelne Subdrehzahlbereiche im gesamten Drehzahlbereich, wobei die einzelnen Subdrehzahlbereiche im Betrieb zu Fluttern führen, wenn die Dämpfung nicht verbessert würde, wieder zugelassen werden, weil ein Fluttern wegen der Dämpfung vermieden wird.

Apparaturen oder Vorrichtungen zur Dämpfung der Schwingungen der Schaufeln dürfen nur geringe Außenmaße aufweisen, weil der zur Verfügung stehende Bauraum zur Unterbringung beschränkt ist. Außerdem müssen die Apparaturen oder Vorrichtungen in Bezug auf die im Betrieb auftretenden hohen Fliehkräfte entsprechend ausgelegt sein, was zu einer Beschränkung der Auswahl der konstruktiven Elemente führt.

Zur Dämpfung der unerwünschten Schwingungen werden derzeit die Schaufeln für einen beschränkten Drehzahlbereich abgestimmt oder Dämpfungseinrichtungen verwendet, die die Flüssigkeits- und/oder Festigkeitsreibung ausnutzen.

Die vorliegende Erfindung hat es sich zur Aufgabe gemacht, eine Schaufel bereitzustellen, bei der im Betrieb unerwünschte auftretende Schwingungen reduziert werden können.

Diese Aufgabe wird gelöst durch eine Schaufel für eine Strömungsmaschine, wobei an der Schaufel ein Schwingungsreduktionsmittel angeordnet ist und derart ausgebildet ist, dass es im Betrieb der Strömungsmaschine auftauchende schädigende Schwingungen der Schaufel reduziert.

Vorteilhafte Weiterbildungen sind in den Unteransprüchen angegeben.

Die Erfindung geht von dem Aspekt aus, dass drei grundlegende Varianten von Schwingungen reduziert werden können.

In einer ersten Variante folgt die Schwingung einer Vielfachen einer Drehzahl und wird als synchrone Schwingungen bezeichnet.

In einer zweiten Variante folgt die Schwingung der Schaufelfrequenz und wird als asynchrone Schwingung bezeichnet.

Eine dritte Variante könnte als bionisches System bezeichnet werden, wobei in dieser Variante eine Rückstellkraft nicht vorgesehen ist.

Die Erfindung geht unter anderem von dem Aspekt aus, dass in einer Variante asynchrone Schwingungen der Schaufel, verringert werden können. Das Schwingungsreduktionsmittel ist so ausgebildet, dass es eine erzwungene Schwingung ausführen kann. Um asynchrone Schwingungen der Schaufel zu dämpfen, muss das Schwingungsreduktionsmittel, das auch als Tilger bezeichnet werden kann, nicht der Anregung, also einer Drehzahlvielfachen, folgen, sondern der Eigenfrequenz der Schaufel. Asynchrone Schwingungen sind Schwingungen der Schaufel, die nicht synchron mit einer Drehzahlvielfachen erfolgen.

In dieser Variante muss das Schwingungsreduktionsmittel derart ausgebildet sein, dass die Eigenfrequenz des Schwingungsreduktionsmittels die gleiche Frequenzcharakteristik wie die Schaufel aufweist. Dafür sollte für das Schwingungsreduktionsmittel eine Steifigkeitsverteilung gewählt werden, das unter der Wirkung der Fliehkraft in Folge einer veränderten Drehzahl nur eine geringe Veränderung der Eigenfrequenz herbeiführt, nämlich in der Größe wie bei der Schaufel.

Das Schwingungsreduktionsmittel weist in einer vorteilhaften Ausführungsform eine Schwingungsmasse auf. Diese Schwingungsmasse wird durch eine äußere Kraft in Form einer "Fußpunktanregung" in Schwingungen versetzt, wobei die somit erzwungene Schwingung der Schwingung der Schaufel entgegenwirkt, wodurch die Schwingung der Schaufel vermindert wird. Die Geometrie der Schwingungsmasse kann hierbei nahezu beliebig sein. Bewährt haben sich beispielsweise eine kugel- oder ellipsenförmige Geometrie.

Vorteilhafter Weise wird die Schwingungsmasse an einem Schwingungsarm angeordnet. Der Schwingungsarm wird hierbei mit der Schwingungsmasse kraftschlüssig verbunden. Beispielsweise kann die Schwingungsmasse mit dem Schwingungsarm verschweißt werden. Das Gebilde aus Schwingungsarm und Schwingungsmasse bildet ein schwingungsfähiges System.

In einer vorteilhaften Ausführungsform ist der Schwingungsarm starr mit der Schaufel verbunden, wodurch bestimmte Schwingungen mit bestimmten Eigenfrequenzen erreicht werden können.

Der Schwingungsarm kann zylinderförmig ausgebildet sein. In einer alternativen Ausführungsform kann der Schwingungsarm kegelförmig ausgebildet sein, wobei die Schwingungsmasse an der Kegelspitze angeordnet ist. Je nach dem, welche Anregungsfrequenzen zu erwarten sind, kann eine geeignete Geometrie für den Schwingungsarm gewählt werden.

In einer alternativen Ausführungsform kann der Schwingungsarm über ein Gelenk mit der Turbinenschaufel verbunden sein. Der Schwingungsarm ist hierbei über das Gelenk bewegbar ausgebildet. Das Schwingungsreduktionsmittel ist dadurch als Pendel ausgebildet und bildet somit ein schwingungsfähiges System.

In einer weiteren alternativen Ausführungsform kann der Schwingungsarm an einem Ende einen Wälzkörper aufweisen, wobei das Schwingungsreduktionsmittel ferner ein Rückhalteelement mit einem Loch aufweist, wobei der Schwingungsarm durch das Loch ragt. Der Wälzkörper liegt an dem Rückhalteelement an.

In einer vorteilhaften Ausführungsform ist das Rückhalteelement bogenförmig ausgebildet.

In weiteren Ausführungsformen ist der Wälzkörper als Zylinder oder als Kugel ausgebildet.

Um die Dämpfung an die äußeren Anregungsfrequenzen anzupassen, ist das Schwingungsreduktionsmittel bevorzugt mit einer Flüssigkeit ausgebildet, wobei die Flüssigkeit ein Öl oder eine tribologische Flüssigkeit ist. Eine Ausführungsform ohne Flüssigkeit und Dämpfung ist möglich und weist entsprechende Vorteile auf.

Vorteilhafterweise wird das Schwingungsreduktionsmittel an der Schaufelspitze angeordnet. Es können auch mehrere Schwingungsreduktionsmittel an die Schaufelspitze angeordnet werden.

Ausführungsbeispiele der Erfindung werden nachfolgend an Hand der Zeichnungen beschrieben. Diese soll die Ausführungsbeispiele nicht maßgeblich darstellen, vielmehr sind die Zeichnungen zur Erläuterung dienlich, in schematisierter und/oder leicht verzerrter Form ausgeführt. Gleichwirkende Teile haben die gleichen Bezugszeichen.

Im Einzelnen zeigt die Zeichnung in
- Figur 1: eine perspektivische Darstellung einer Schaufel mit einer Schwingungsmode,
- Figur 2: Schnittdarstellung durch eine Schaufelspitze,
- Figur 3: Schnittdarstellung einer weiteren Schaufelspitze mit einem alternativen Schwingungsreduktionsmittel,
- Figur 4: eine Schnittdarstellung durch eine Schaufelspitze mit einer weiteren alternativen Ausführungsform eines Schwingungsreduktionsmittels und
- Figur 5: Schnittdarstellung einer Schaufelspitze mit einer weiteren alternativen Ausführungsform eines Schwingungsreduktionsmittels.

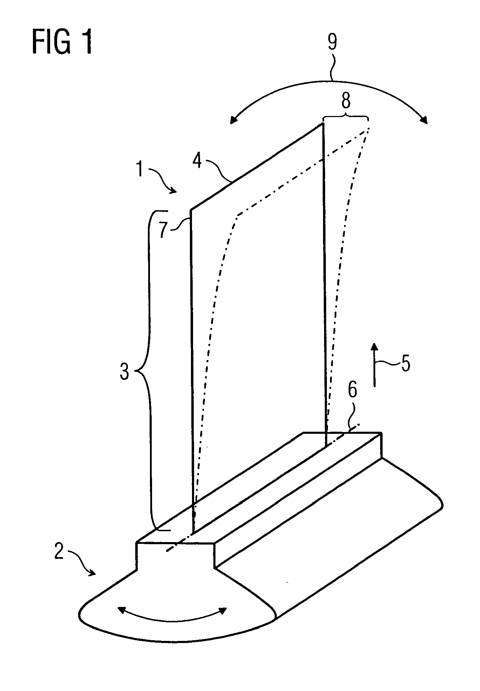

In der Figur 1 wird eine Schaufel 1 perspektivisch dargestellt. Solch eine Schaufel 1 kann beispielsweise in Strömungsmaschinen wie z.B. Dampf- oder Gasturbine oder Verdichtern eingesetzt werden. Solch eine Schaufel 1 kann als Verdichterschaufel oder als Turbinenschaufel eingesetzt werden. Die Schaufel 1 weist einen Schaufelfuß 2 auf, der in eine entsprechende Nut in einem Rotor eingebaut werden kann. Die Schaufellänge 3 ist unterschiedlich und hängt von dem Einsatzbereich der Schaufel 1 ab. Im Dampfturbinenbau werden beispielsweise Turbinenschaufeln mit bis zu 1,80 m Länge eingesetzt. Der Übersichtlichkeit wegen ist in der Figur 1 kein Deckband auf der Schaufelspitze 4 eingezeichnet. Die Schaufel 1 ist in einer Längsrichtung 5 ausgebildet.

Im Betrieb kann die Schaufel 1 Schwingungen um eine Drehachse 6 führen. Hierbei schwingt die Schaufelspitze 4 mit einer Amplitude 8 um die Ruheposition 7. Die Schwingungsbewegung wird hierbei durch den Pfeil 9 dargestellt.

Die Schaufel 1 kann weitere Schwingungen im Betrieb führen, wie z.B. eine Schwingung um die Richtung 5. Allen Schwingungen ist gemeinsam, dass die Schwingung auf die Schaufelfüße 2 übertragen wird und da die Schaufelfüße 2 in Nuten angeordnet sind, kann dies zu einer Materialermüdung in den Schaufelfüßen 2 bzw. in den Nuten führen.

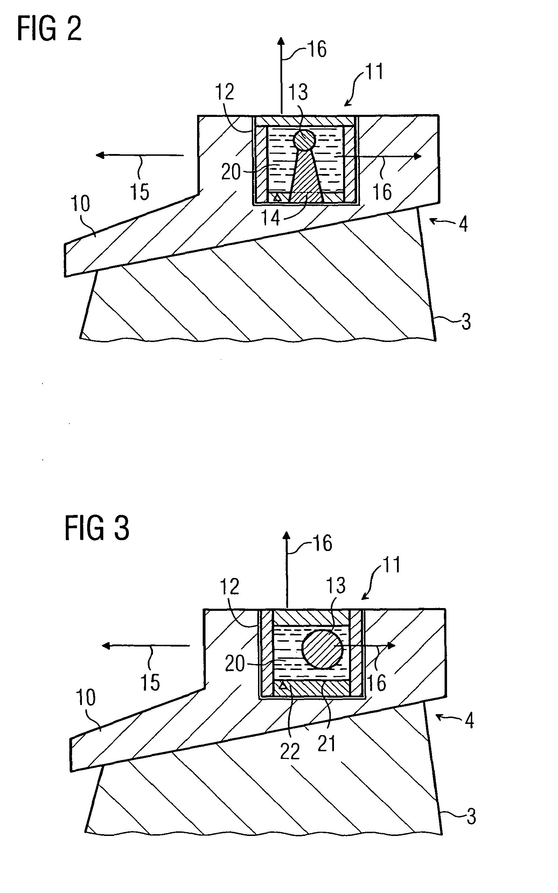

In der Figur 2 ist eine Schnittdarstellung einer Schaufelspitze 4 mit einem Deckband 10 zu sehen. Das Deckband 10 weist ein Schwingungsreduktionsmittel 11 auf. Das Schwingungsreduktionsmittel 11 ist in einer Aussparung 12 in dem Deckband 10 angeordnet. In der Aussparung 12 wird das Schwingungsreduktionsmittel 11 eingebaut. In der in Figur 2 dargestellten Ausführungsform weist das Schwingungsreduktionsmittel 11 eine Schwingungsmasse 13 auf. Diese Schwingungsmasse 13 kann als Kugel, Ellipse oder Viereck ausgebildet sein. Die Schwingungsmasse 13 ist an einem Schwingungsarm 14 angeordnet. Der Schwingungsarm 14 ist hierbei starr mit der Schaufel 1 verbunden.

Die Schaufelspitze 4 kann beispielsweise in einer Auslenkungsrichtung 15 ausgelenkt werden. Im Betrieb erfährt die Schaufel 1 und insbesondere das Schwingungsreduktionsmittel 11 eine Fliehkraft 16, die radial nach außen wirkt. Durch die Auslenkung 15 wird die Schwingungsmasse 13 über den Schwingungsarm 14 zu einer erzwungenen Schwingung angeregt, wobei das Schwingungsreduktionsmittel 11 derart ausgebildet ist, dass es im Betrieb der Strömungsmaschine auftauchende schädigende Schwingungen der Schaufel 1 dämpft.

Der Schwingungsarm 14 kann hierbei zylinderförmig oder kegelförmig ausgebildet sein, wobei die Schwingungsmasse 13 auf der Kegelspitze angeordnet ist. Er ist so zu gestalten, dass die Eigenfrequenz des Dämpfers der Eigenfrequenz der Schaufel folgt.

In der Figur 3 ist eine Schnittdarstellung einer Schaufel 1 zu sehen, die eine alternative Ausführungsform des Schwingungsreduktionsmittels 11 zeigt. Der Unterschied zu der in Figur 2 dargestellten Ausführungsform ist, dass die Schwingungsmasse 13 nicht starr über einen Schwingungsarm 14 mit der Schaufelspitze 4 verbunden ist, sondern frei in der Aussparung 12 im Schwingungsreduktionsmittel 11 angeordnet ist. Durch die Trägheit der Schwingungsmasse 13 wird eine Kraft der Auslenkung 15 in Gegenrichtung 16 entgegenwirken. Eine somit auftretende Schwingung wird gedämpft. Dieser Effekt kann vergrößert werden, wenn im Schwingungsreduktionsmittel eine Flüssigkeit 20 angeordnet ist. Die Flüssigkeit 20 kann ein Öl oder eine tribologische Flüssigkeit sein. Die Flüssigkeit ist im Schwingungsreduktionsmittel 11 so angeordnet, dass es die Schwingungsmasse 13 komplett umströmt. Des Weiteren kann eine Zwischenplatte 21 im Schwingungsreduktionsmittel 11 derart angeordnet sein, dass ein Gas 22 in einem unteren Bereich des Schwingungsreduktionsmittels 11 angeordnet werden kann.

Das Schwingungsreduktionsmittel 11 wird vorzugsweise in der Schaufelspitze 4 angeordnet.

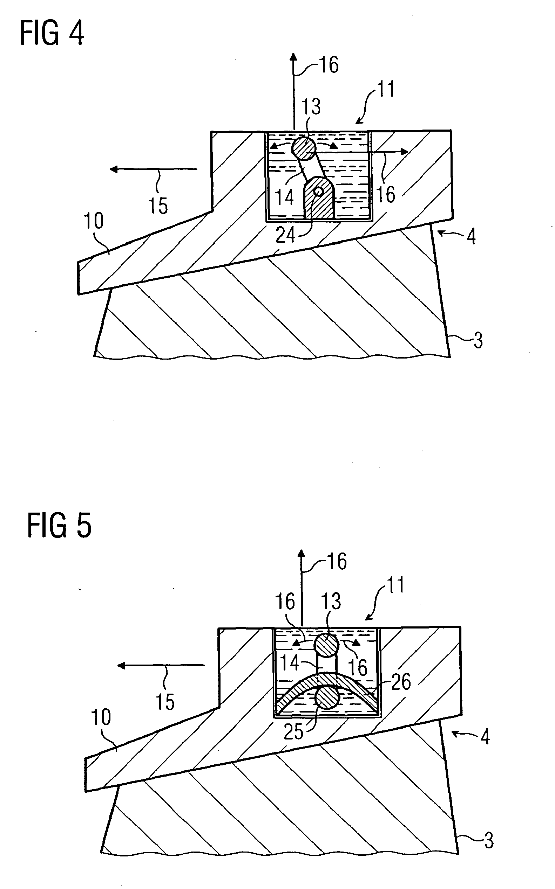

In der Figur 4 ist eine weitere Schnittdarstellung eines Schwingungsreduktionsmittels 11 zu sehen. Das Schwingungsreduktionsmittel 11 weist eine Schwingungsmasse 13 auf, die über einen Schwingungsarm 14 und einem Gelenk 24 mit der Schaufel 1 gekoppelt ist. Die Schwingungsmasse 13 und der Schwingungsarm 13 können als Pendel aufgefasst werden. Eine Schwingung, die in einer Auslenkungsrichtung 15 erfolgt, wird durch eine Schwingung der Schwingungsmasse 13 in der Auslenkungsrichtung 16 entgegengewirkt. Dieser Effekt kann unterstützt werden, in dem im Schwingungsreduktionsmittel 11 eine Flüssigkeit enthalten ist, wie dies zu den Ausführungsformen gemäß Figur 2 und gemäß Figur 3 erwähnt wurde.

In der Figur 5 ist eine weitere Schnittdarstellung einer Schaufel 1 mit einem Schwingungsreduktionsmittel 11 zu sehen. Das in dieser Figur 5 dargestellte Schwingungsreduktionsmittel 11 weist eine bewegbare Schwingungsmasse 13 auf, die an einem Schwingungsarm 14 angeordnet ist. Ferner weist der Schwingungsarm 14 an einem Ende einen Wälzkörper 25 auf. Dieser Wälzkörper 25 kann als Kugel oder als Zylinder ausgebildet sein. Der Schwingungsarm 14 ragt durch ein Rückhalteelement 26 hindurch. Der Schwingungsarm 14 und das Rückhalteelement 26 sind derart ausgebildet, dass die Schwingungsmasse 13 eine Schwingung in der Gegenrichtung 16 führen kann. Das Rückhalteelement 26 ist vorzugsweise bogenförmig ausgebildet. Dies führt dazu, dass eine Schwingung der Schwingungsmasse 13 zu einer rollenden bzw. walzenden Bewegung des Wälzkörpers 25 an dem Rückhalteelement 26 erfolgt, wodurch Energie dissipiert wird. Auch in dieser Ausführungsform kann das Schwingungsreduktionsmittel 11 eine Flüssigkeit aufweisen, wie dies zu den Ausführungsformen in den Figuren 2, 3 und 5 erwähnt wurde.

## Patentansprüche

1. Schaufel (1) für eine Strömungsmaschine,
wobei in der Schaufel (1) ein Schwingungsreduktionsmittel (11) angeordnet ist,
das derart ausgebildet ist,
dass es im Betrieb der Strömungsmaschine auftauchende schädigende Schwingungen der Schaufel (1) reduziert.

2. Schaufel (1) nach Anspruch 1,
wobei das Schwingungsreduktionsmittel (11) eine in Querrichtung der Schaufel (1) bewegbare Schwingungsmasse (13) aufweist.

3. Schaufel (1) nach Anspruch 2,
wobei die Schwingungsmasse (13) an einem Schwingungsarm (14) angeordnet ist.

4. Schaufel (1) nach Anspruch 3,
wobei der Schwingungsarm (14) starr mit der Schaufel (1) verbunden ist.

5. Schaufel (1) nach Anspruch 4,
wobei der Schwingungsarm (14) zylinderförmig ausgebildet ist.

6. Schaufel (1) nach Anspruch 4,
wobei der Schwingungsarm (14) kegelförmig ausgebildet ist,
wobei die Schwingungsmasse (13) an der Kegelspitze angeordnet ist.

7. Schaufel (1) nach Anspruch 3,
wobei der Schwingungsarm (14) über ein Gelenk (24) mit der Schaufel (1) verbunden ist und
wobei der Schwingungsarm (14) über das Gelenk (24) bewegbar ausgebildet ist.

8. Schaufel (1) nach Anspruch 3,
wobei der Schwingungsarm (14) an einem Ende einen Wälzkörper (25) aufweist,
wobei das Schwingungsreduktionsmittel (11) ferner ein Rückhaltelement (26) mit einem Loch aufweist,
wobei der Schwingungsarm (14) durch das Loch ragt.

9. Schaufel (1) nach Anspruch 3,
wobei das Rückhaltelement (26) bogenförmig ausgebildet ist.

10. Schaufel (1) nach Anspruch 8 oder 9,
wobei der Wälzkörper (25) als Kugel ausgebildet ist.

11. Schaufel (1) nach Anspruch 8 oder 9,
wobei der Wälzkörper (25) als Zylinder ausgebildet ist.

12. Schaufel (1) nach einem der Ansprüche 2 bis 11,
wobei das Schwingungsreduktionsmittel (11) eine Flüssigkeit aufweist.

13. Schaufel (1) nach Anspruch 12,
wobei die Flüssigkeit ein Öl ist.

14. Schaufel (1) nach Anspruch 12,
wobei die Flüssigkeit eine tribologische Flüssigkeit ist.

15. Schaufel (1) nach einem der vorhergehenden Ansprüche,
wobei das Schwingungsreduktionsmittel (11) in der Schaufelspitze (4) angeordnet ist.

16. Schaufel (1) nach einem der vorhergehenden Ansprüche,
wobei die Schaufel (1) als Turbinenschaufel oder Verdichterschaufel ausgebildet ist.
